Europäisches Patentamt

(19) European Patent Office

Office européen des brevets

(11) EP 0 725 718 B1

(12) **EUROPEAN PATENT SPECIFICATION**

(45) Date of publication and mention
of the grant of the patent:
**20.10.1999 Bulletin 1999/42**

(21) Application number: **94926586.2**

(22) Date of filing: **26.08.1994**

(51) Int. Cl.$^6$: **B29C 37/00**, B29C 70/00,
B32B 25/10, E01F 9/04,
E01F 9/08

(86) International application number:
**PCT/US94/09593**

(87) International publication number:
**WO 95/08426 (30.03.1995 Gazette 1995/14)**

(54) **PAVEMENT MARKING AND BASE SHEET**

FAHRBAHNMARKIERUNG UND GRUNDFOLIE

MARQUAGE DE LA CHAUSSEE ET FEUILLE DE BASE

(84) Designated Contracting States:
**DE FR GB IT**

(30) Priority: **20.09.1993 US 123569**

(43) Date of publication of application:
**14.08.1996 Bulletin 1996/33**

(73) Proprietor:
**MINNESOTA MINING AND MANUFACTURING
COMPANY
St. Paul, Minnesota 55133-3427 (US)**

(72) Inventors:
• **RICE, Eric, E.
Saint Paul, MN 55133-3427 (US)**

• **HARGETT, Randall, A.
Saint Paul, MN 55133-3427 (US)**

(74) Representative:
**VOSSIUS & PARTNER
Postfach 86 07 67
81634 München (DE)**

(56) References cited:
| | |
|---|---|
| **EP-A- 0 372 727** | **WO-A-92/15756** |
| **WO-A-93/17188** | **GB-A- 2 054 408** |
| **US-A- 4 146 635** | **US-A- 5 077 117** |
| **US-A- 5 194 113** | |

Printed by Xerox (UK) Business Services
2.16.7/3.6

## Description

<u>Field of Invention</u>

The present invention relates to a pavement marking base sheet and pavement markings, such as tapes, that are adhered to a roadway to provide traffic control markings and the like.

<u>Background</u>

Preformed pavement marking materials are used as traffic control markings for a variety of uses, such as short or long distance lane striping, stop bars, and pedestrian lane markings at intersections. Typically preformed pavement marking materials comprise a continuous wear-resistant top layer overlying a flexible base sheet and are adhered to a pavement surface with a pressure-sensitive adhesive or contact cement.

It is known to incorporate scrim materials, e.g., nonwoven or woven materials (sometimes referred to as a "scrim") exhibiting high tensile strength, especially in temporary pavement markings to facilitate removal of the markings from the pavement. Typically the scrim is provided underneath or on the road side of the conformance layer as disclosed in U.S. Patent No. 4,299,874 (Jones et al.).

U.S. Patent No. 4,146,635 (Eigenmann) discloses a pavement marking with a "thin, pliable, essentially inextensible and tensionally resistant" scrim. The reference teaches that the scrim, referred to as an "intermediate layer", may be a film or a non-woven fibrous structure and that it serves to distribute and transfer over a larger interfacial area the stresses tangentially applied to the top of the pavement marking by passing vehicles.

U.S. Patent No. 5,194,113 (Lasch et al.) discloses a process for making conformable thermoplastic marking sheets which may be durable or removed. The conformable marking sheet includes a top layer suitable for carrying reflecting elements and skid-resisting particles, a conformance layer, an adhesive layer, and an optional liner.

Despite the advances to date, there exists a desire for pavement markings that exhibit greater durability and greater conformability. Many current pavement markings suffer delamination between component layers unacceptably early.

<u>Summary of Invention</u>

The present invention provides a base sheet for pavement markings such as pavement marking tapes, and pavement markings comprising such base sheets that provide surprising durability and conformability.

In brief summary, pavement markings of the invention comprise, in order, an upper sheet, typically with optional retroreflective elements and/or optional skid control particles protruding from the top surface thereof, a novel base layer of the invention, and typically an optional adhesive layer. Pavement markings of the invention differ from those previously known in that the base layer comprises, in order, an extensible fibrous scrim, a tie layer, and a conformance layer wherein the tie layer material impregnates the lower portion of the scrim and material of the upper sheet impregnates the upper portion of the scrim.

Pavement markings of the invention may be made in desired form, e.g., as tapes in roll form, or sheets, with or without an adhesive for securing to pavement, etc.

Pavement markings of the invention provide several advantages in performance as well as in fabrication. The tie layer and scrim combination provided herein provides a degree of adhesion between high durability upper sheets and highly conformable base layers that was not heretofore available. As a result of the invention, pavement marking tapes with wear resistant upper sheets provide higher conformance and in turn better adhesion to pavement surfaces resulting in longer lifetimes.

<u>Brief Description of Drawing</u>

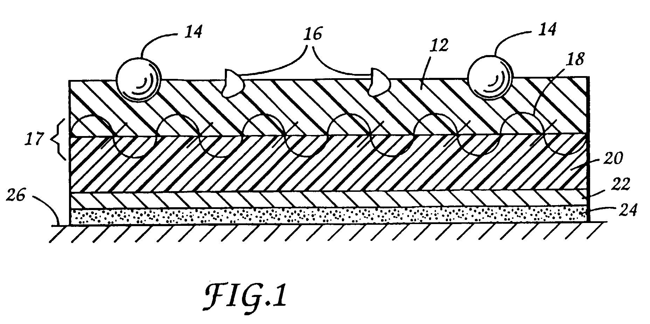

The invention will be further explained with reference to the drawing wherein Figure 1 is a cross-sectional illustration of an illustrative pavement marking of the invention on the surface of pavement.

This figure, which is idealized, is not to scale and is intended to be merely illustrative and non-limiting.

<u>Detailed Description of Illustrative Embodiments</u>

An illustrative pavement marking of the invention is shown in Figure 1. Marking 10 comprises upper sheet 12 with optional retroreflective elements 14 and optional skid control particles 16 protruding from the top surface thereof, base sheet 17 comprising scrim 18, tie layer 20, and conformance layer 22, and adhesive layer 24 on pavement surface 26 of a road.

The upper sheet is typically a polymeric matrix, preferably durable and wear-resistant and typically contains retroreflective elements and skid resistant particles protruding from the top surface of the upper sheet. Illustrative examples of materials from which upper sheets can be made include urethanes, copolymers of ethylene and methacrylic acid, epoxies, vinyls, etc. For instance, the urethane top layers disclosed in U.S. Patent No. 5,077,117 (Harper et al.), which is incorporated herein by reference in its entirety, may be used in pavement markings of the present invention. U.S. Patent No. 5,077,117 teaches that the top layer in pavement markings of that invention preferably have a Young's modulus of from 50,000 to 300,000 pounds/inch$^2$ (350 to 2100 MPa), and more preferably from 50,000 to 250,000 pounds/inch$^2$ (350 to 1750 MPa), to achieve the purposes of that invention. It has been observed that such top layers might be relatively stiffer than desired for some applications. In the present invention, top layers having a Young's modulus outside this range can be used if desired.

A variety of suitable retroreflective elements and skid resistant particles will be well known to those skilled in the art. Illustrative examples of retroreflective elements include ceramic and glass microspheres, sometimes having hemispheric reflectors thereon or with pigment particles in the top layer. Illustrative examples of skid resistant particles include angular ceramic particles and stone particles having a high hardness.

The upper sheet will typically contain one or more colorants, e.g., pigments or dyes, to impart desired color thereto.

The upper sheet is typically between 100 and 1500 microns (4 and 60 mils) thick. It generally provides the desired conspicuity and message bearing function (i.e., desired color coding) and may be a single layer, optionally containing retroreflective elements and/or skid resistant (i.e., traction-promoting) particles, as shown in Figure 1. Alternatively, the upper sheet may be of a multi-layer construction. For instance, the upper sheet may comprise a top layer with retroreflective elements and/or anti-skid particles protruding therefrom and an underlying secondary layer. To extend the life of the pavement marking, the secondary layer may also be pigmented a desired color and contain embedded retroreflective elements and/or anti-skid particles. As the marking is worn and the top layer is progressively worn away, the secondary layer becomes exposed and as it wears away, previously buried retroreflective elements and anti-skid particles are exposed. An illustrative example of a multi-layer upper sheet that can be used in a pavement marking of the invention is disclosed in the aforementioned U.S. Patent No. 5,077,117 wherein, with reference to Figure 1 thereof, layer 18 would serve as a top layer of a pavement marking of the instant invention and layer 12 as described at column 2, lines 57 through column 3, line 19, would serve as a secondary layer of a pavement marking of the instant invention. U.S. Patent Nos. 4,117,192 (Jorgensen) and 4,490,432 (Jordan) disclose each materials that can be used in upper sheets of pavement markings of the invention.

Base sheets of the invention comprise a fibrous scrim, a tie layer made of a resinous material, and a conformance layer, with the tie layer material impregnating the lower portion of the scrim.

The scrim is fibrous web or fabric material, e.g., a knit, a non-woven, or woven web. The scrim should be stretchable and is preferably substantially non-elastic, i.e., exhibits a low residual force toward recovery of its initial dimensions after being stretched.

The scrim preferably has sufficient tensile strength to support the other elements of the base sheet and the pavement marking throughout fabrication, conversion, application to a pavement surface, and where desired, removal from the pavement.

Scrims made of polyester materials are typically preferable for use with urethane-based upper sheets because such scrims typically exhibit high adhesion to such materials and are also typically quite durable. Another illustrative example of a suitable material is polypropylene which is less preferred because the tie layer material and upper sheet material which contact the scrim may need to include surfactants or other agents to achieve effective wetting out and impregnation, and adhesion to the scrim.

The scrim is typically between about 50 and about 500 microns (2 and 20 mils) thick with about 100 to 125 microns (4 to 5 mils) being preferred. Scrims that are too thick may tend to make the base sheet and resultant pavement marking tape stiffer than desired and require greater amounts of tie layer and upper sheet material to fill the web. Scrims that are too thin may tend to provide less strength than is desired.

Suitable weight of the scrim will depend in part upon the nature of the fibers and suitable size of the fibers will depend in part upon the arrangement, e.g., weaver or pattern, of the fibers, but typically scrims will be made up of fibers having a denier of below about 5 and will have a weight of between about 0.5 and about 5 ounces/yard$^2$ (17 and 170 grams/meter$^2$). Preferably the scrim is sufficiently porous that the portion of the upper sheet in contact therewith (i.e., the bottom portion of the top layer in a single layer upper sheet or the bottom portion of a secondary layer in a multi-layer upper sheet) will penetrate the upper regions of the scrim to achieve good contact with the tie layer material which is impregnated in the bottom portions of the scrim layer. Scrims exhibiting a Frazier Air Permeation of at least 400 feet$^3$/minute per foot$^2$ at 0.5 inch of water (120 meter$^3$/minute per meter$^2$ at 1.3 centimeter of water), preferably at least 1000 feet$^3$/minute per foot$^2$ at 0.5 inch of water (300 meter$^3$/minute per meter$^2$ at 1.3 centimeter of water), are typically suitable. One illustrative material useful as a scrim in base sheets and pavement marking tapes of the invention is REEMAY™ Style No. 2055 spun bonded web, a web made up of four denier straight fiber polyester, having a basis weight of about 0.55 ounce/yard$^2$ (19 grams/meter$^2$), a thickness of about 90 microns (4.5 mils), a trapezoid tear strength of about 4 pounds (1.8 kilograms) in the machine direction and about 4.5 pounds (2.0 kilograms) in the cross direction, a Mullen Burst of about 10 pounds/inch$^2$ (4.9 grams/centimeter$^2$), and a Frazier Air Permeability of about 1075 feet$^3$/minute per foot$^2$ at 0.5 inch of water (325 meter$^3$/minute per meter$^2$ at 1.3 centimeter of water). Another illustrative example of a suitable web is REEMAY™ Style No. 2430, but that web (basis weight 2.4 ounces/yard$^2$ (83 grams/meter$^2$) and 17 mil (425 micron) thickness) yields a stiffer pavement marking.

The tie layer is made up of a resinous material and serves to securely bond the scrim to the conformance layer. Accordingly, a material that will provide a strong adhesive bond to both the scrim material and the conformance layer is preferred. The tie layer material should be capable of being processed so as to impregnate into the bottom portion of the scrim matrix. Preferably, the tie layer material will impregnate through the scrim material so as to contact the material of the upper sheet that impregnates into the top portion of the scrim, and in such instances preferably provides strong bond thereto. The tie layer material should exhibit sufficient bond strength to the scrim, conformance layer, and upper sheet that the various interfaces will withstand the shear forces encountered during conversion, application, and use of base sheets and pavement markings of the invention.

An illustrative example of a suitable tie layer material is polybutadiene resin-based pressure-sensitive adhesive. For instance, a pressure-sensitive adhesive having the following formulation has been found useful (parts by weight): 11 to 12 parts TAKTENE™ 220S Rubber (polybutadiene), 2 to 3 parts ESCOREZ™ 1102 Resin (tackifier), 8 to 9 parts PICCOLYTE™ A135 Resin (tackifier), 0 to 1 part carbon black, 0.1 to 0.5 part SANTONOX™ R (filler), 1 to 2 parts HYDRAL™ 710W (filler), 5 to 6 parts hydrated aluminum silicate, and 1 to 2 parts HRJ-1367 phenolic curing catalyst, with 1 to 2 parts ethanol and 65 to 70 parts heptane. The composition was coated onto the conformance layer and dried to remove substantially all of the solvent and then the scrim laminated thereto. An adhesive composition having the following formulation is also expected to be useful: 0.1 to 1 part IRGANOX™ 1010 antioxidant, 42 to 44 parts PICCOLYTE™ A135 Resin, 12 to 13 parts ESCOREZ™ 1102 Resin, and 42 to 45 parts TAKTENE™ 220S Rubber.

The tie layer should be thick enough to securely bond the scrim to the conformance layer and penetrate into the scrim without covering the upper portions of the scrim. Preferably the tie layer separates the scrim and conformance layer such that the scrim is not in direct contact with the conformance layer.

Conformance layer 22 is typically an aluminum foil between about 50 and about 125 microns (2 and 5 mils) thick. Thinner foils may tend to wrinkle so readily as to be difficult to use whereas thicker foils tend to cost more and result in less conformable resultant products. The foil preferably has a dull or matte finish on both sides and is preferably substantially free of surface oils and other contaminants that might interfere with adhesion to the foil. Suitable foils, sometimes referred to as dead soft aluminum, will be readily selected by those skilled in the art. Other illustrative examples of materials suitable as conformance layers herein include certain extruded films, e.g., rubber, certain thermoplastic polymers, etc., that are known to those skilled in the art. Although these materials are typically easier to attain proper adhesion of the tie layer and underlying adhesive layer to, they are typically more expensive than suitable aluminum foils.

Optional adhesive layer 24 may be provided on the bottom surface of base sheet 17. A suitable adhesive for adhering a base sheet and/or pavement marking tape of the invention to a desired substrate can be readily selected by one skilled in the art. Illustrative examples of adhesives include pressure-sensitive adhesives, contact cements, and heat-activated adhesives.

Examples

The invention will be further explained by the following illustrative examples which are intended to be non-limiting. Unless otherwise indicated, all amounts are expressed in parts by weight. Unless otherwise indicated, the following test methods were used.

Hand Conformability

Hand Conformability is assessed by applying the subject base sheet or pavement marking to an irregular or rough surface such as a concrete block or asphalt composite and visually evaluating the degree to which surface roughness is replicated in the top of the subject base sheet or pavement marking. Elastic recovery of the subject material can be assessed by observing the tendency of the replicated roughness to disappear over time.

Mandrel Conformability

Mandrel Conformability is assessed by wrapping the subject material around a 0.5 inch (1.25 centimeter) diameter mandrel then removing it. The ease of bending and permanence of the impression or bend in the material is observed.

Inelastic Deformation Conformability

Inelastic Deformation Conformability is assessed by (1) applying sufficient tensile force to a 2.5 by 10 centimeter (1 by 4 inch) test strip of the subject material until it is stretched a predetermined amount, e.g., 5 percent, (2) reducing the tensile force to zero and allowing the material to recover, and (3) again applying the tensile force until a predetermined significant fraction of the force to first elongate the sample is reached and measuring the degree of elongation from original length. The degree of elongation at which the predetermined fractional force is reached is divided by the first elongation of 5 percent and the result expressed in percent as Inelastic Deformation. The strain at which force is first observed on the second pull is a measure of how much of the first deformation was permanent. A perfectly elastic material would have an inelastic deformation of 0 percent.

Water Flow Conformability

Water Flow Conformability is a measure of conformability of a pavement marking to an uneven pavement surface. A circular piece of the subject pavement marking 10 centimeters (4 inches) in diameter with a 1.3 centimeter (0.5 inch) hole in the middle is applied to a pavement surface and then tamped into place, in this instance by 6 passes with a tamper cart loaded with 200 pounds (91 kilograms). A graduated cylinder is placed within the hole, water placed therein, and the water permitted to drain from the bottom of the cylinder through the hole to underneath the pavement marking. Poor conformability is indicated by a faster rate of drainage with a slower rate of drainage indicating better conformability. The cylinder is such that the hydrostatic head varies from 17 inches to 15 inches (43 to 38 centimeters) as 200 milliliters of water flows beneath the pavement marking. The rate is evaluated by placing 2000 milliliters of water in the cylinder and recording the time ($t_R$) for 200 milliliters of water to flow. After pavement marking is tested, the marking is removed and rubber disk of the same size is placed on the same location with 5 pounds distributed over its surface. The test is performed on the rubber disk with the time ($t_Q$) being recorded. The conformability of the marking is calculated as follows:

$$\% \text{ conformance} = [1 - (t_R/t_Q)^{1/2}] \times 100\%.$$

Due to the short time required to perform the test, it is assumed that the amount of water absorbed in the pavement surface is negligible.

Example 1 And Comparative Example A

In Example 1, an illustrative base sheet and pavement marking of the invention was made as follows. Road side adhesive, e.g., polybutadiene resin in heptane was coated on a polyester release liner with a wet weight of about 85 grains per 4 inch by 6 inch unit area (5.5 grams per 10 by 15 centimeter unit area), dried for about 4 minutes at 200°F (93°C) (yielding a dry weight of about 27 grains (1.8 grams) per unit area) and then the conformance layer laminated thereto with the bottom of the conformance layer in contact with the road side adhesive layer. Tie layer material, in this case the same material used as the road side adhesive, was then coated on the top side of the conformance layer to a wet weight of about 45 grains per 4 inch by 6 inch unit area (2.9 grams per unit area) and the construction heated in an oven at about 240°F (115°C) for about 2 minutes. Scrim material was then laminated to the tie layer with 50 pounds/inch$^2$ (24 grams/centimeter$^2$) to yield a base sheet with optional adhesive layer and rolled up. The base sheet can be wound upon itself into roll form without a liner or used directly to fabricate a pavement marking. In this instance, a liner on the road side adhesive was used to facilitate subsequent coating operations.

A top layer composition comprising the urethane composition disclosed in Example 1 of the aforementioned U.S. Patent No. 5,077,117 was then coated, to a wet thickness of between about 7 mils (175 microns) on the top of the base sheet, i.e., on the scrim layer. Retroreflective elements (glass microspheres having an index of refraction of 1.75 and ceramic microspheres having an index of refraction of 1.76) were dropped on the top layer at weights of 24 and 5 grains per 4 inch by 6 inch unit area (1.6 and 0.3 grams per unit area), respectively. The construction was then cured at between 275 and 325°F (135° and 163°C) for about 6 minutes to yield a finished conformable pavement marking sheet.

In Comparative Example A, a pavement marking was made as in Example 1 except the scrim and tie layer were omitted.

The pavement marking in Example 1 was mounted in a transverse test area, i.e., an area where motor vehicles such as automobiles and light trucks would cross it an average of at least 10,000 times per day and did not exhibit any delamination of the top layer from the remainder of the marking after 15 months. The pavement marking of Comparative Example A, mounted adjacent the sample from Example 1 so it would be crossed by the same vehicles, exhibited top layer delamination after 18 days.

Example 2

In Example 2 a base sheet was made as in Example 1 and then an additional layer of polybutadiene rubber was applied over the scrim layer, to a wet thickness of 45 grains per 4 inch by 6 inch unit area (2.9 grams per unit area), and the construction then dried at 200°F (93°C) for 2 minutes. A durable upper sheet comprising an 18 mil (450 micron) rubber secondary layer and a 50 to 75 micron (2 to 3 mil) vinyl top layer like that disclosed in Table I of the aforementioned U.S. Patent No. 4,490,432 was then laminated to the adhesive under 50 pounds/inch$^2$ (24 grams/centimeter$^2$) pressure.

Example 3

A thermoplastic upper sheet was prepared in accordance with U.S. Patent No. 5,194,113 as follows. The top layer was ethylene/methacrylic acid copolymer, and the secondary layer comprised polyolefin and calcium carbonate particulate and lower secondary layer of polybutadiene rubber adhesive.

A base sheet was made as in Example 1 and then the lower secondary layer of polybutadiene adhesive coated thereon at a wet weight of 45 grains per 4 inch by 6 inch unit area (2.9 grams per unit area), the construction dried at 200°F (93°C) for 2 minutes and then laminating the remaining portions of the upper sheet under 50 pounds/inch$^2$ (24 grams/centimeter$^2$) pressure.

Example 4

A base sheet was made as in Example 1 and then an upper sheet comprising a urethane-based top layer like that disclosed in the aforementioned U.S. Patent No. 5,077,177 and a rubber secondary layer like that disclosed in Table I of the aforementioned U.S. Patent No. 4,490,432 laminated thereto.

Example 5

A pavement marking was made as in Example 3 except the upper sheet comprised only the thermoplastic top layer and the secondary layer was omitted.

Example 6

A pavement marking was made as in Example 2 except the upper sheet comprised a 2 to 3 mil (50 to 75 micron) thick vinyl layer containing retroreflective elements and the secondary layer was a 48 mil (1200 micron) highly filled, calendared, flexible acrylonitrile butadiene rubber sheet.

Comparative Example B

The pavement marking was STAMARK™ No. 5710 Pavement Marking from Minnesota Mining and Manufacturing Company ("3M"), a pavement marking comprising a 2 to 3 mil (50 to 75 micron) thick vinyl top layer, 18 mil (450 micron) thick rubber layer, 2.4 ounce/yard$^2$ (83 gram/meter$^2$) polyester scrim saturated with 90 grains per 4 inch by 6 inch unit area (5.8 grams per unit area) of polybutadiene rubber adhesive.

Comparative Example C

The pavement marking was STAMARK™ No. 420 Pavement Marking from 3M, a pavement marking comprising a 6 mil (150 micron) thick top layer, a 39 mil (975 micron) thick rubber layer, and 35 grains per 4 inch by 6 inch unit area (2.3 grams per unit area) of polybutadiene rubber adhesive.

Table I

| Inelastic Deformation of pavement markings from the indicated Examples, with and without base sheets as indicated. Each result is the average of four samples with the standard deviation reported in parenthesis. | | |
|---|---|---|
| Example | No Base Sheet | Base Sheet |
| 1 | 31.7 (0.86) | 76.7 (1.4) |

Table I (continued)

| Inelastic Deformation of pavement markings from the indicated Examples, with and without base sheets as indicated. Each result is the average of four samples with the standard deviation reported in parenthesis. | | |
|---|---|---|
| 2 | 31.7 (0.36) | 80.2 (0.71) |
| 3 | 25.9 (2.2) | 55.4 (4.3) |
| 4 | 31.7 (0.53) | 45.7 (5.1) |
| 5 | 16.6 (0.44) | 75.1 (5.8) |
| 6 | 30.5 (0.89) | 70.1 (0.85) |

Table II

| Water Flow Conformance of pavement markings from the indicated Examples and Comparative Examples. Conformance was measured on a highway, with the following results being obtained from measurements taken in the wheel track portion of a lane and the center portion of a lane as indicated. | | |
|---|---|---|
| Example | Conformance | |
| | Track | Center |
| 1 | 71.3 | 61.2 |
| 2 | 85.4 | 83.1 |
| B | 68.0 | 46.5 |
| C | 41.2 | 37.6 |

Various modifications and alterations of this invention will become apparent to those skilled in the art without departing from the scope and spirit of this invention.

## Claims

1. A pavement marking base sheet characterized in that said base sheet comprises an extensible fibrous scrim (18), a tie layer (20), and a conformance layer (22), said tie layer material impregnating the lower portion of said scrim.

2. The base sheet of claim 1 further characterized in that said tie layer material is a pressure-sensitive adhesive comprising polybutadiene resin.

3. A conformable pavement marking comprising an upper sheet (12) and the base sheet of claim 1, characterized in that material of said upper sheet impregnates the upper portion of said scrim.

4. The pavement marking of claim 3 further characterized in that said upper sheet comprises a top layer and an underlying secondary layer, said secondary layer being in contact with and impregnating said upper portion of said scrim.

5. The pavement marking of claim 3 wherein said upper sheet comprises at least one of retroreflective elements and skid control particles.

6. The pavement marking of claim 3 further characterized in at least one of the following:

   a) said upper sheet comprises one or more of the following polymeric resins: urethane, copolymer of ethylene and methacrylic acid, epoxy, and vinyl; or
   b) said upper sheet is between about 100 and 1500 microns thick.

7. The pavement marking of claim 3 further characterized in at least one of the following:

   a) said scrim comprises a web made of polyester or polypropylene; or
   b) said scrim comprises a polyester web and the portion of said upper sheet that is in contact with said scrim is urethane-based.

8. The pavement marking of claim 3 further characterized in that said tie layer material impregnates sufficiently far through said scrim and said upper sheet material impregnates sufficiently far through said scrim that said tie layer material and said upper sheet material are in contact.

9. The pavement marking of claim 3 further characterized in at least one of the following:

   a) said tie layer material is a pressure-sensitive adhesive comprising polybutadiene resin; or
   b) said tie layer material comprises 11 to 12 parts by weight polybutadiene rubber, 10 to 12 parts by weight tackifier, 0 to 1 part by weight carbon black, 6 to 8 parts by weight filler, and 1 to 2 parts phenolic curing agent.

10. The pavement marking of claim 3 further characterized in at least one of the following:

    a) said conformance layer is aluminum; or
    b) said conformance layer is between 25 and 125 microns thick; or
    c) said conformance layer comprises rubber or a thermoplastic polymer.

11. The pavement marking of claim 3 further characterized in that said marking further comprises an adhesive layer on the bottom surface of said conformance layer.

## Patentansprüche

1. Fahrbahnmarkierungsgrundfolie, dadurch gekennzeichnet, daß die Grundfolie einen dehnbaren Fasermull (18), eine Verbindungsschicht (20) und eine Anpassungsschicht (22) umfaßt, wobei das Verbindungsschichtmaterial den unteren Teil des Mulls imprägniert.

2. Grundfolie gemäß Anspruch 1, ferner dadurch gekennzeichnet, daß das Verbindungsschichtmaterial ein Haftklebstoff ist, der Polybutadienharz umfaßt.

3. Anpassungsfähige Fahrbahnmarkierung, umfassend eine Oberfolie (12) und die Grundfolie gemäß Anspruch 1, dadurch gekennzeichnet, daß das Material der Oberfolie den oberen Teil des Mulls imprägniert.

4. Fahrbahnmarkierung gemäß Anspruch 3, ferner dadurch gekennzeichnet, daß die Oberfolie eine Deckschicht und eine darunterliegende Sekundärschicht umfaßt, wobei die Sekundärschicht mit dem Mull in Kontakt steht und dessen oberen Teil imprägniert.

5. Fahrbahnmarkierung gemäß Anspruch 3, wobei die Oberfolie mindestens einen Vertreter, ausgewählt aus retroreflektiven Elementen und Körnchen, die dem Rutschen entgegenwirken, umfaßt.

6. Fahrbahnmarkierung gemäß Anspruch 3, ferner durch mindestens einen der folgenden Punkte gekennzeichnet:

   a) die Oberfolie umfaßt ein oder mehrere der folgenden Polymerharze: Urethan, Copolymer aus Ethylen und Methacrylsäure, Epoxid und Vinyl; oder
   b) die Oberfolie Weist eine Dicke zwischen etwa 100 und 1500 μm auf.

7. Fahrbahnmarkierung gemäß Anspruch 3, ferner durch mindestens einen der folgenden Punkte gekennzeichnet:

   a) der Mull umfaßt ein Gewebe aus Polyester oder Polypropylen; oder
   b) der Mull umfaßt ein Polyestergewebe und der mit dem Mull in Kontakt stehende Teil der Oberfolie basiert auf Urethan.

8. Fahrbahnmarkierung gemäß Anspruch 3, ferner dadurch gekennzeichnet, daß das Verbindungsschichtmaterial ausreichend weit den Mull imprägniert und das Oberfolienmaterial ausreichend weit den Mull imprägniert, daß das Verbindungsschichtmaterial und das Oberfolienmaterial in Kontakt stehen.

9. Fahrbahnmarkierung gemäß Anspruch 3, ferner durch mindestens einen der folgenden Punkte gekennzeichnet:

a) das Verbindungsschichtmaterial ist ein Haftklebstoff, der Polybutadienharz umfaßt; oder
b) das Verbindungsschichtmaterial umfaßt 11 bis 12 Gewichtsteile Polybutadienkautschuk, 10 bis 12 Gewichtsteile Klebrigmacher, 0 bis 1 Gewichtsteil Ruß, 6 bis 8 Gewichtsteile Füllstoff und 1 bis 2 Gewichtsteile phenolisches Härtungsmittel.

10. Fahrbahnmarkierung gemäß Anspruch 3, ferner durch mindestens einen der folgenden Punkte gekennzeichnet:

a) die Anpassungsschicht ist Aluminium; oder
b) die Anpassungsschicht weist eine Dicke zwischen 25 und 125 µm auf; oder
c) die Anpassungsschicht umfaßt Kautschuk oder ein thermoplastisches Polymer.

11. Fahrbahnmarkierung gemäß Anspruch 3, ferner dadurch gekennzeichnet, daß die Markierung ferner eine Klebstoffschicht auf der Unterseite der Anpassungsschicht umfaßt.

## Revendications

1. Feuille de base pour le marquage d'une chaussée caractérisée en ce que ladite feuille de base comprend un canevas fibreux extensible (18), une couche d'accrochage (20) et une couche de conformité (22), ladite matière de couche d'accrochage imprégnant la portion inférieure dudit canevas.

2. Feuille de base selon la revendication 1, caractérisée de plus en ce que ladite matière de couche d'accrochage est un adhésif auto-adhésif comprenant une résine polybutadiène.

3. Marquage de chaussée conformable comprenant une feuille supérieure (12) et la feuille de base selon la revendication 1, caractérisé en ce que la matière de ladite feuille supérieure imprègne la portion supérieure dudit canevas.

4. Marquage de chaussée selon la revendication 3, caractérisé en outre en ce que ladite feuille supérieure comprend une couche supérieure et une couche secondaire sous-jacente, ladite couche secondaire étant en contact avec ladite portion supérieure dudit canevas et imprégnant celle-ci.

5. Marquage de chaussée selon la revendication 3, dans lequel ladite feuille supérieure comprend au moins un d'éléments rétro-réfléchissants et de particules anti-dérapages.

6. Marquage de chaussée selon la revendication 3, caractérisé de plus par au moins une des propositions suivantes:

a) ladite feuille supérieure comprend une ou plusieurs des résines polymères suivantes: uréthanne, copolymère d'éthylène et d'acide méthacrylique, époxy et vinylique; ou
b) ladite feuille supérieure possède une épaisseur comprise entre environ 100 et 1 500 micromètres.

7. Marquage de chaussée selon la revendication 3, caractérisé de plus par au moins une des propositions suivantes:

a) ledit canevas comprend une toile composée de polyester ou de polypropylène; ou
b) ledit canevas comprend une toile de polyester et la portion de ladite feuille supérieure qui est en contact avec ledit canevas est à base d'uréthanne.

8. Marquage de chaussée selon la revendication 3, caractérisé de plus en ce que ladite matière de couche d'accrochage pénètre et imprègne ledit canevas suffisamment loin et ladite matière de feuille supérieure pénètre et imprègne ledit canevas suffisamment loin, que ladite matière de couche d'accrochage et ladite matière de feuille supérieure sont en contact.

9. Marquage de chaussée selon la revendication 3, caractérisé de plus par au moins une des propositions suivantes:

a) ladite matière de couche d'accrochage est un adhésif auto-adhésif comprenant une résine polybutadiène; ou

b) ladite matière de couche d'accrochage comprend de 11 à 12 parties en poids de caoutchouc polybutadiène, 10 à 12 parties en poids d'agent collant, 0 à 1 partie en poids de noir de carbone, 6 à 8 parties en poids de charge et 1 à 2 parties d'agent durcissant phénolique.

10. Marquage de chaussée selon la revendication 3, caractérisé de plus par au moins une des propositions suivantes:

a) ladite couche de conformité est en aluminium; ou
b) ladite couche de conformité possède une épaisseur comprise entre 25 et 125 micromètres; ou
c) ladite couche de conformité comprend du caoutchouc ou un polymère thermoplastique.

11. Marquage de chaussée selon la revendication 3, caractérisé de plus en ce que ledit marquage comprend de plus une couche adhésive sur la surface inférieure de ladite couche de conformité.

*FIG.1*